(19) Europäisches Patentamt
European Patent Office
Office européen des brevets

(11) **EP 2 347 217 B1**

(12) **FASCICULE DE BREVET EUROPEEN**

(45) Date de publication et mention de la délivrance du brevet:
**14.12.2016 Bulletin 2016/50**

(21) Numéro de dépôt: **09760536.4**

(22) Date de dépôt: **22.10.2009**

(51) Int Cl.:
*E21B 47/00* $^{(2012.01)}$       *E21B 17/01* $^{(2006.01)}$
*G01M 11/08* $^{(2006.01)}$

(86) Numéro de dépôt international:
**PCT/FR2009/052023**

(87) Numéro de publication internationale:
**WO 2010/046602 (29.04.2010 Gazette 2010/17)**

(54) **PROCÉDÉ D'ÉTALONNAGE D'UN DISPOSITIF DE CONTRÔLE OPTIQUE DE COURBURE**

VERFAHREN ZUM KALIBRIEREN EINER EINRICHTUNG ZUR OPTISCHEN KRÜMMUNGSÜBERWACHUNG

METHOD FOR CALIBRATING A DEVICE FOR OPTICAL CURVATURE MONITORING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.10.2008 FR 0805942**

(43) Date de publication de la demande:
**27.07.2011 Bulletin 2011/30**

(73) Titulaire: **Technip France**
**92400 Courbevoie (FR)**

(72) Inventeurs:
• **NICOLAS, Yann**
**38000 Grenoble (FR)**
• **LEMBEYE, Philippe**
**F-76380 Montigny (FR)**

(74) Mandataire: **Gendron, Vincent Christian et al**
**Fédit-Loriot**
**38, avenue Hoche**
**75008 Paris (FR)**

(56) Documents cités:
**EP-A- 1 635 034      WO-A-98/41815**
**FR-A- 2 867 561      FR-A- 2 871 511**
**JP-A- 62 006 138**

**Description**

L'invention concerne le domaine du contrôle optique de déformation, et en particulier le contrôle de structures telles que des conduites flexibles marines ou des ouvrages d'art.

Des conduites flexibles marines sont habituellement utilisées pour le transport d'hydrocarbures extraits de gisements offshore. De telles conduites sont notamment décrites dans le document normatif API RP 17B « Recommended Practice for Flexible Pipe » publié par l'American Petroleum Institute. Les conduites flexibles montantes (« flexibles risers » en anglais) relient une installation de fond, par exemple une tête de puits ou un collecteur reposant sur le fond marin, à une installation de surface, par exemple une unité flottante de production. Une conduite flexible montante doit pouvoir endurer de fortes sollicitations mécaniques, notamment celles générées par son propre poids, par les pressions interne et externe, et par les variations de courbure engendrées par les mouvements de l'installation de surface sous l'effet de la houle et les courants marins.

Une solution connue permettant de réduire les contraintes dynamiques endurées par de telles conduites consiste à utiliser des raidisseurs formant manchons, adaptés à les entourer afin de les rigidifier et de limiter leur courbure dans les zones critiques, notamment dans leur partie supérieure au voisinage de l'installation de surface. Selon une application particulière de ces raidisseurs aux conduites montantes, ils présentent une extrémité supérieure solidarisée à l'installation de surface au moyen d'une bride et ils se prolongent le long de la conduite sur une longueur variable. La conduite flexible est emmanchée dans le raidisseur de façon coaxiale. De la sorte, malgré les effets de la houle et des courants marins au voisinage de la surface, la conduite flexible conserve un rayon de courbure nettement supérieur à son rayon de courbure minimum acceptable « MBR » (pour Minimum Bending Radius, en langue anglaise) et n'est ainsi pas détériorée. Ces raidisseurs sont également susceptibles d'être emmanchés sur des portions de conduite qui s'étendent près du fond pour limiter encore une fois leur courbure.

Ces raidisseurs étant des composants essentiels fortement sollicités, il s'avère nécessaire de s'assurer de leur intégrité pendant une durée de service pouvant dépasser 20 ans. Ainsi, il a été imaginé d'enregistrer systématiquement les déformations de ces raidisseurs au moyen de dispositifs de contrôle insérés dans leur épaisseur afin de contrôler leur bon fonctionnement. Ces mesures peuvent aussi servir à déterminer les contraintes dynamiques cumulées endurées par la conduite ou le raidisseur au fil du temps afin d'estimer leur état de fatigue.

Le document WO 2005-088375 décrit un dispositif de contrôle de la flexion d'une structure. Ce dispositif de contrôle comprend une tige rigide déformable présentant un axe central de révolution. La tige centrale est typiquement réalisée en résine époxyde renforcée par de la fibre de verre. La tige rigide déformable est équipée de trois capteurs optiques de déformation répartis et fixés sur son pourtour. Les capteurs optiques comprennent des fibres optiques parallèles à la tige et munies de réseaux de Bragg photo-inscrits, se comportant comme des jauges optiques de déformation. Les trois réseaux de Bragg ont des longueurs identiques de l'ordre de quelques millimètres. Ils sont tous les trois situés à la même cote axiale le long de la tige, c'est-à-dire que leurs trois centres sont inclus dans un même plan perpendiculaire à l'axe de la tige. Les fibres optiques sont logées dans des rainures ménagées à la périphérie de la tige. Un dispositif optoélectronique relié à ces trois capteurs permet de mesurer les longueurs d'onde réfléchies par les réseaux de Bragg et d'en déduire les trois déformations axiales $\varepsilon a$, $\varepsilon b$, $\varepsilon c$, subies par les trois fibres optiques au niveau desdits trois réseaux de Bragg. Une fois ces trois déformations axiales ainsi mesurées, il est possible d'en déduire par calcul les trois inconnues que sont le rayon de courbure $\rho$ de la tige rigide déformable au niveau des trois réseaux de Bragg, l'orientation angulaire $\psi$ du plan de flexion par rapport à la tige rigide déformable, et enfin l'allongement axial homogène $\varepsilon$ subi par la tige rigide déformable, ledit allongement axial homogène résultant par exemple de contraintes externes de traction/compression ou de phénomènes de dilatation thermique. Ce calcul, détaillé à la page 29 du document précité, fait aussi intervenir des paramètres supposés connus sur la géométrie de la tige rigide déformable et des capteurs, et notamment à la position relative des trois réseaux de Bragg par rapport à l'axe de la tige rigide déformable.

La tige rigide déformable équipée des capteurs d'un tel dispositif de contrôle peut être noyée dans l'épaisseur d'un raidisseur dans une partie apte à fléchir, et parallèlement à l'axe du raidisseur et à la conduite. De la sorte, lorsque la conduite flexible est en service, les mouvements du raidisseur provoquent le fléchissement de la tige rigide déformable et ainsi, les capteurs fournissent des signaux représentatifs de la courbure du raidisseur. Sur la base de ces signaux, l'orientation du plan de flexion de la tige et le rayon de courbure sont calculés. Ces données peuvent ensuite être traitées en temps réel, par exemple pour déclencher une alarme si le rayon de courbure devient inférieur à un seuil critique prédéfini, ou enregistrées pour traitement en temps différé, par exemple pour estimer l'endommagement par fatigue et la durée de vie restante.

De tels dispositifs sont notamment décrits dans les documents FR2871511, WO2006-021751, et dans la publication « Fatigue Monitoring of Flexible Risers Using Novel Shape-Sensing Technology », référence OTC19051, Offshore Technology Conference, Houston, 30 avril au 3 mai 2007, lesquels divulguent par ailleurs l'emploi de tiges rigides déformables de géométrie autre que cylindrique, par exemple octogonale ou triangulaire.

Dans la publication OTC19051, la tige rigide déformable comporte quatre capteurs optiques de déformation du type réseau de Bragg, le quatrième ayant été ajoutée pour créer une redondance. Cette publication divulgue aussi en page 2 une méthode de calcul de la courbure de l'orientation du plan de flexion à partir des quatre déformations axiales ε1, ε2, ε3, ε4 mesurées. Cette méthode de calcul fait aussi intervenir la position relative des quatre réseaux de Bragg par rapport à l'axe de la tige rigide déformable.

Les rayons de courbure appliqués aux raidisseurs varient en pratique entre quelques mètres et l'infini. En pratique, il est nécessaire que les tiges rigides déformables de mesure de courbure équipant ces raidisseurs puissent mesurer précisément des rayons de courbure $\rho$ supérieurs à 3m. La courbure Cu étant l'inverse du rayon de courbure (Cu=1/p), on peut indifféremment raisonner sur l'une ou l'autre de ces deux grandeurs, mais il est plus simple d'utiliser la courbure pour traiter les problèmes de précision de mesure. La plage de mesure de courbure est donc de 0 à 0.33m$^{-1}$. La précision de mesure de courbure requise pour cette application doit typiquement être meilleure que + /- 0,0015 m$^{-1}$, ce niveau de précision étant nécessaire pour une analyse d'endommagement en fatigue.

De plus, afin de faciliter la fabrication, le stockage, le transport et l'installation de ces tiges rigides déformables, lesquelles peuvent avoir une longueur totale supérieure à plusieurs dizaines de mètres, il est souhaitable que ces dernières puissent être enroulées à un rayon minimum de courbure de l'ordre de 0.5m à 1 m. Or, les fibres optiques équipant les tiges rigides déformables ne doivent pas être soumises à des allongements relatifs supérieurs à 0,5%, faute de quoi elles risqueraient d'être endommagées. C'est pourquoi les tiges rigides déformables destinées à équiper les raidisseurs des conduites flexibles offshore ont en pratique un diamètre faible, typiquement de l'ordre de 5mm à10mm, ce qui permet de réduire les allongements maximaux subis par les fibres optiques lorsque la tige rigide déformable est courbée à son rayon minimum (Voir page 25 de WO 2005-088375). Ce faible diamètre a cependant pour inconvénient de contribuer à réduire la précision des mesures de courbure, de telle sorte que l'objectif de précision de + /- 0,0015 m$^{-1}$ soit en pratique particulièrement difficile à atteindre dans le cas où le diamètre de la tige déformable est de l'ordre de 10mm ou moins.

Un autre facteur aggravant par rapport à ce problème de précision de mesure est que la tige rigide déformable est réalisée en résine renforcée en fibre de verre, si bien que des dispersions non négligeables sont introduites sur différents paramètres géométriques : diamètre de la tige, forme des rainures, décalage angulaire entre les fibres optiques, distance entre les fibres optiques et l'axe central de la tige... La fixation des fibres optiques sur le pourtour de la tige par des résines époxydes engendre également des contraintes à l'origine d'erreurs de mesure. De tels matériaux composites, du fait de leur procédé de fabrication, ont généralement des tolérances dimensionnelles médiocres, de l'ordre de plus ou moins quelques dixièmes de mm. Ces tolérances médiocres induisent par ailleurs des erreurs d'autant plus importantes que le diamètre de la tige est faible. Ainsi, en pratique, dans le cas d'une tige rigide déformable en fibre de verre de diamètre 10mm, il a été constaté que l'erreur de mesure de courbure peut souvent dépasser + /-0,003 m$^{-1}$ , ce qui n'est pas satisfaisant.

Une première solution pour de résoudre ce problème consiste à tester systématiquement la précision de mesure de chaque tige rigide déformable après sa fabrication, et à ne conserver que celles ayant la précision requise. Cependant, cette solution engendre un taux de rebut important et n'est pas économiquement viable.

Une deuxième solution consiste à réaliser la tige rigide déformable à partir d'un profil métallique à haute limite élastique façonné avec une grande précision, par exemple un profil en titane obtenu par tréfilage à froid et présentant des tolérances dimensionnelles au centième de millimètre. Cependant, cette solution est peu avantageuse économiquement.

Une troisième solution pour résoudre ce problème consiste à augmenter le diamètre de la tige rigide déformable comme cela est enseigné dans la publication OTC19051, ce document proposant un diamètre égal à 75mm. Cette solution permet d'améliorer la précision de mesure dans le cas de grands rayons de courbure. Cependant, elle présente l'inconvénient d'augmenter le rayon de courbure minimal que peut admettre la tige rigide déformable sans risque d'endommagement des fibres optiques, ce qui d'une part pose des problèmes de stockage et de manutention de ladite tige, et d'autre part empêche les mesures de faibles rayons de courbure. En pratique, une tige rigide déformable de diamètre 75mm devrait être stockée sur des bobines de diamètre 15m et ne pourrait pas être utilisée pour mesurer durablement, sans risque de rupture prématurée en fatigue, des rayons de courbures inférieurs à 15m à 20m, rayons que le raidisseur est susceptible d'atteindre seulement par conditions de gros temps ou de tempête.

L'invention vise à résoudre ce problème de précision de mesure de courbure, tout en évitant les inconvénients précités. L'invention porte ainsi sur un procédé d'étalonnage d'un dispositif de contrôle de la courbure d'un raidisseur d'une conduite flexible marine, ce dispositif de contrôle étant muni d'une tige déformable présentant un axe central et d'au moins trois capteurs optiques maintenus appliqués contre le pourtour de ladite tige, comprenant les étapes consistant à :

- pour différentes orientations successives de plans de flexion autour dudit axe central :

  - fléchir la tige selon un même rayon de courbure;
  - mesurer la déformation des capteurs lors de la flexion;

- extrapoler des déformations mesurées, une fonction sinusoïdale de la déformation pour chaque capteur en fonction de l'orientation du plan de flexion ;
- calculer des coefficients de correction d'erreur en fonction du décalage angulaire entre les fonctions sinusoïdales extrapolées et en fonction des amplitudes des courbes sinusoïdales extrapolées.

Selon une variante, le calcul des coefficients de correction d'erreur comprend le calcul des positions réelles des au moins trois capteurs optiques par rapport à l'axe central en fonction des amplitudes des courbes sinusoïdales extrapolées.

Selon encore une variante, la tige est ramenée dans une position sensiblement rectiligne après chaque flexion.

Selon encore une autre variante, la tige est fléchie par application contre son pourtour d'un élément d'étalonnage présentant une courbure prédéfinie.

Selon une autre variante, la tige est immobilisée en rotation par rapport à son axe central, l'élément d'étalonnage étant monté à rotation autour de cet axe central.

Selon encore une variante, deux supports assurent le maintien en position de la tige, l'élément d'étalonnage étant appliqué contre la tige entre les supports, les supports autorisant le pivotement de la tige autour de deux axes sensiblement perpendiculaires à l'axe central de la tige.

Selon encore une autre variante, chaque capteur optique comprend un tronçon de fibre optique comprenant un réseau de Bragg et maintenu appliqué contre le pourtour de la tige.

Selon une variante, les réseaux de Bragg des différents tronçons de fibre sont disposés au même niveau selon l'axe central de la tige.

Selon une autre variante, la flexion est appliquée au niveau desdits réseaux de Bragg.

Selon encore une variante, l'extrapolation de la fonction sinusoïdale d'un capteur établit une fonction du type :

$$\varepsilon_j = A_{j0} + A_{j1}*\cos(\alpha) + B_{j1}*\sin(\alpha)$$

$A_{j1}$ étant la composante en phase et $B_{j1}$ la composante en quadrature de phase de l'harmonique fondamentale, ces composantes étant déterminées par une méthode de séries de Fourier sur la base des mesures de déformation, $\alpha$ étant l'orientation du plan de flexion autour de l'axe central.

Selon encore une variante, au moins une harmonique de rang supérieur à l'harmonique fondamentale est déterminée par une méthode de séries de Fourier, et les mesures de déformation sont répétées si le rapport entre l'harmonique de rang supérieur et l'harmonique fondamentale dépasse un seuil.

D'autres caractéristiques et avantages de l'invention ressortiront clairement de la description qui en est faite ci-après, à titre indicatif et nullement limitatif, en référence aux dessins annexés, dans lesquels :

- la figure 1 est une vue en coupe de côté d'une conduite flexible équipée d'un raidisseur au niveau de sa jonction avec une station de surface ;
- la figure 2 est une vue en coupe de dessus du raidisseur muni d'un dispositif de contrôle;
- la figure 3 est une vue de côté d'un banc d'étalonnage du dispositif de contrôle avec un étalon de courbure éloigné d'une tige;
- la figure 4 est une vue en coupe de face du banc de la figure 3 ;
- la figure 5 est une vue de côté d'un banc d'étalonnage du dispositif de contrôle avec un étalon de courbure en contact avec la tige;
- la figure 6 est une vue en coupe de face du banc de la figure 4 ;
- la figure 7 est une vue en coupe de face du banc pour une autre position angulaire de l'étalon, celui-ci étant éloigné de la tige ;
- la figure 8 est une vue en coupe de face du banc pour cette position angulaire de l'étalon, celui-ci étant en contact avec la tige ;
- la figure 9 est une vue en coupe de face d'un support de tige du banc ;
- la figure 10 est une vue en coupe de côté du support de tige de la figure 9 ;
- la figure 11 est une vue en coupe de dessus du support de tige de la figure 9, durant une flexion de la tige ;
- la figure 12 est une vue en coupe de côté du support de tige de la figure 9, durant une autre flexion de la tige ;
- la figure 13 est une vue en coupe de côté du support de la figure 9 muni d'une fixation de la tige, cette dernière étant au repos ;
- la figure 14 est une vue en coupe de côté du support de la figure 9 muni d'une fixation de la tige, cette dernière étant fléchie ;
- la figure 15 est une vue en coupe de côté du support de la figure 9, la tige étant au repos et munie d'une gaine de protection ;

- la figure 16 est une vue en coupe de côté du support de la figure 9, la tige étant fléchie et munie d'une gaine de protection ;
- la figure 17 représente des courbes sinusoïdales extrapolées d'un nuage de points de mesure du dispositif de contrôle.

L'invention propose un procédé d'étalonnage d'un dispositif de contrôle de la courbure d'une structure, notamment un ouvrage d'art ou un raidisseur de conduite sous-marine. Ce dispositif de contrôle est muni d'une tige déformable présentant un axe central et d'au moins trois capteurs optiques maintenus contre le pourtour de la tige. L'invention propose d'appliquer des flexions selon un même rayon de courbure mais dans des plans de flexion différents sur la tige déformable. A partir des mesures de déformation des capteurs, des fonctions sinusoïdales de la déformation en fonction du plan de flexion sont extrapolées, pour déduire des coefficients de correction d'erreur des capteurs optiques.

Le calcul des coefficients de correction d'erreur peut notamment comprendre le calcul des positions réelles des au moins trois capteurs optiques par rapport à l'axe central C. Ce procédé d'étalonnage permet donc de déterminer de façon précise et non destructive les caractéristiques géométriques principales de la tige ayant une influence sur la mesure de courbure, en particulier les positions par rapport à l'axe central C de la tige de capteurs optiques tels que des réseaux de Bragg. Le calcul des positions réelles des capteurs est intéressant pour tenir compte d'un comportement non linéaire de la déformation des capteurs optiques en fonction de la courbure de la tige. Ce comportement non linéaire est particulièrement marqué lorsque la tige déformable présente des tolérances dimensionnelles médiocres. Le calcul des positions réelles des capteurs optiques permet ainsi de réaliser une modélisation géométrique précise de la tige déformable et de ses capteurs.

De la sorte, même si la tige déformable présente des tolérances dimensionnelles médiocres, c'est-à-dire s'il existe des écarts importants entre d'une part les cotes nominales sur plans et d'autre part les cotes réelles après fabrication, il reste malgré tout possible d'obtenir une bonne précision de mesure de courbure. La précision de mesure sera notamment plus précise en réutilisant les cotes réelles calculées au lieu des cotes nominales lors du calcul de la courbure en fonction des mesures d'allongement, comme cela sera détaillé plus loin. L' invention permet donc de réduire les rebuts de tiges déformables instrumentées, de conserver un procédé de fabrication et d'installation économique, ainsi qu'un capteur de faible diamètre apte à mesurer les faibles rayons de courbure, tout en augmentant fortement la précision de mesure de courbure, y compris pour les grands rayons de courbure.

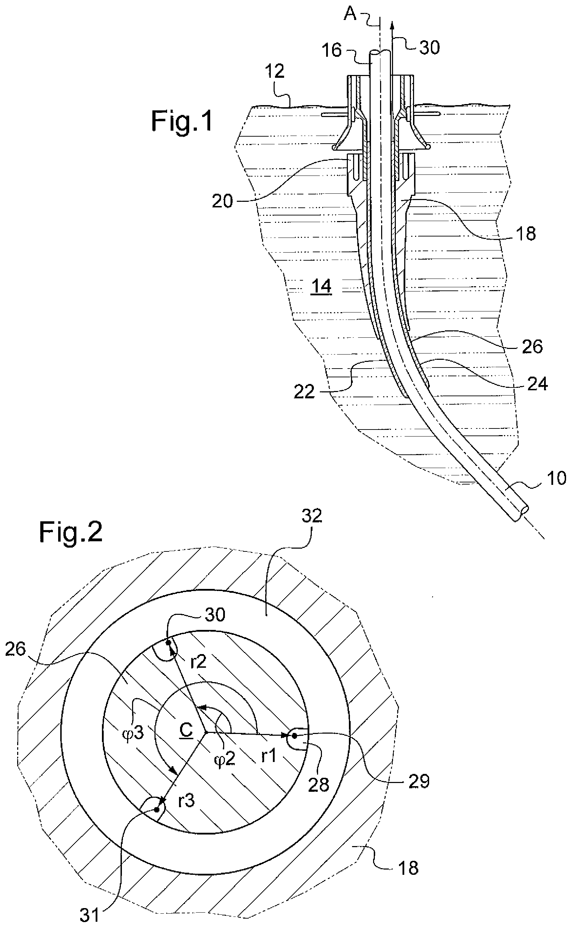

La Figure 1 montre une conduite flexible 10, communément appelée " riser " qui s'étend sensiblement verticalement depuis la surface 12 vers le fond marin 14. Cette conduite flexible 10 présente une extrémité de surface 16 qui est solidaire d'une installation de surface non représentée. Par ailleurs cette extrémité de surface 16 est emmanchée dans un raidisseur 18 dont l'extrémité supérieure 20 est maintenue en position fixe sur une plate-forme et dont l'extrémité inférieure 22 se prolonge autour de la conduite 10 vers le fond marin 14 sur une distance, par exemple entre 5 et 10 mètres. Au repos et non incurvé, ce raidisseur 18 présente un axe de symétrie A. Le raidisseur 18 sert à limiter l'amplitude de flexion de la conduite 10 au voisinage de la surface 12. Le raidisseur 18 est typiquement réalisé dans un matériau polymérique, par exemple du polyuréthane. Le matériau du raidisseur 18 sera avantageusement plus rigide que le matériau de la conduite flexible. A la figure 1, le raidisseur 18 présente une section annulaire qui s'amenuise de l'extrémité supérieure 20 vers l'extrémité inférieure 22. Sur toute la longueur du raidisseur 18, des capteurs de déformation 24 sont installés pour contrôler à la fois l'amplitude de flexion du raidisseur 18 et l'orientation du plan de flexion.

On se référera maintenant à la Figure 2 pour décrire un dispositif de contrôle associé au raidisseur 18. La Figure 2 illustre en section droite un jonc 26 formant une tige rigide déformable. Le jonc 26 est noyé dans l'épaisseur du raidisseur 18 jusqu'au voisinage de son extrémité inférieure 22. Ce jonc 26 présente une section circulaire d'axe central C. Ce jonc 26 présente un diamètre de l'ordre de la dizaine de millimètres, par exemple compris entre 4 et 15 mm. A intervalles angulaires réguliers autour de l'axe C, des rainures longitudinales 28 sont ménagées sur toute la longueur dudit jonc 26. Les rainures longitudinales 28 sont en l'occurrence approximativement décalées de 120° les unes par rapport aux autres.

Dans chacune de ces rainures 28, une fibre optique 29, 30, 31 est maintenue au moyen d'une résine, par exemple époxy. Ces fibres optiques 29, 30, 31 s'étendent longitudinalement sur toute la longueur dudit jonc 26 qui lui-même s'étend sur toute la longueur du raidisseur 18. De la sorte, les fibres optiques 29, 30, 31 s'étendent de l'extrémité inférieure 22 jusqu'à l'extrémité supérieure 20 et au-delà pour être connectées à des moyens de traitement du signal. Des réseaux de Bragg sont imprimés dans les fibres optiques 29, 30, 31 selon un procédé de photo-inscription connu par ailleurs. Chaque réseau de Bragg a une longueur de l'ordre de quelques millimètres et se comporte comme un capteur optique de mesure de l'allongement de la fibre optique parallèlement à son axe principal. Cet axe principal est en outre sensiblement parallèle à l'axe central C du jonc 26. Chaque fibre optique est équipée de plusieurs réseaux de Bragg, typiquement 3 à 10 réseaux répartis sur la longueur du raidisseur, le reste de la fibre optique servant de canal de transmission aux signaux optiques , selon un principe de mesure distribuée bien connu et notamment décrit dans le document WO2005-088375 Les fibres optiques 29, 30, 31 comportent le même nombre de réseaux de Bragg, les réseaux étant répartis de façon identique et aux mêmes cotes le long des trois fibres 29, 30, 31. Une zone élémentaire de mesure de courbure, vue selon un plan de coupe perpendiculaire à l'axe central C du jonc 26, comporte trois réseaux de Bragg perpendiculaires audit plan de coupe, ces trois réseaux de Bragg étant imprimés sur les trois fibres optiques 29, 30, 31 à des cotes identiques, si bien qu'ils coupent tous les trois ledit plan de coupe. Par suite, le jonc 26 comporte plusieurs zones élémentaires de mesure de courbure, typiquement 3 à 10 zones réparties sur la longueur du raidisseur.

Le jonc 26 peut être réalisé en matériaux composites renforcés par des fibres de verre. Un tel matériau, est à la fois rigide et flexible et tout à fait adapté à supporter des capteurs optiques. En outre, un tel matériau est adapté à suivre les déformations longitudinales du raidisseur 18. Le jonc 26 pourra être inclus dans une gaine de protection.

Si on s'intéresse plus précisément à l'une des zones de mesure de courbure, telle que représentée à la Figure 2, celle-ci comporte donc trois capteurs optiques constitués de trois réseaux de Bragg imprimés sur les trois fibres optiques 29, 30, 31, et répartis sur le pourtour du jonc 26. Les trois capteurs permettent de déterminer entièrement, au niveau de cette zone de mesure, l'orientation du plan de flexion du jonc 26 et l'amplitude de la flexion et, par-là même la déformation du raidisseur 18. Deux des trois capteurs sont suffisants pour déterminer complètement le plan de flexion du jonc 26 et l'amplitude de cette flexion, le troisième capteur permettant de corriger le signal fourni par les deux autres lorsque le jonc 26 subit en plus de la courbure une déformation axiale homogène d'amplitude inconnue. Cette déformation axiale du jonc 26 dans le raidisseur 18 est essentiellement due aux frottements entre le jonc 26 et le raidisseur 18, et/ou à des effets liés aux variations de température (dilatation thermique).

La position des trois réseaux de Bragg imprimés sur les trois fibres optiques 29, 30, 31, déterminée par rapport à l'axe central C dans le plan de coupe de la Figure 2, et exprimée en coordonnées cylindriques, fait intervenir cinq cotes principales $r1$, $r2$, $r3$, $\varphi2$, $\varphi3$ intervenant dans la mesure de courbure. Les rayons $r1$, $r2$, $r3$ sont les distances séparant respectivement l'axe central C des trois fibres 29, 30, 31, ces trois distances étant exprimées dans le plan de coupe transversale correspondant à la zone de mesure de courbure considérée. L'angle $\varphi2$ est l'angle entre d'une part le segment reliant l'axe central C et la première fibre 29 et d'autre part le segment reliant l'axe central C et la deuxième fibre 30, cet angle étant mesuré dans le plan de coupe transversale correspondant à la zone de mesure de courbure considérée. L'angle $\varphi3$ est l'angle entre d'une part le segment reliant l'axe central C et la première fibre 29 et d'autre part le segment reliant l'axe central C et la troisième fibre 31, cet angle étant mesuré dans le plan de coupe transversale correspondant à la zone de mesure de courbure considérée.

Si le jonc 26 était réalisé de façon parfaite, les cotes réelles après fabrication seraient égales aux cotes nominales sur plan : les trois rayons $r1$, $r2$, $r3$ seraient égaux, et les deux angles $\varphi2$ et $\varphi3$ vaudraient respectivement 120° et 240°. Dans ce cas idéal, il est possible de calculer précisément la courbure à partir d'une part des allongements $\varepsilon1$, $\varepsilon2$, $\varepsilon3$ mesurés respectivement par les trois capteurs optiques 29, 30, 31, et d'autre part des cotes nominales précitées du jonc 26. Un exemple de méthode de calcul applicable à ce cas idéal est détaillée à la page 29 du document WO2005-088375.

Cependant, dans le cas d'un jonc réel, les cotes réelles après fabrication peuvent être significativement différentes des cotes nominales. Ainsi, comme illustré sur la Figure 2, les cotes $r1$, $r2$, $r3$, $\varphi2$ et $\varphi3$ ne sont pas égales aux valeurs nominales, notamment en raison du procédé de fabrication du jonc 26 et plus particulièrement de la taille des rainures 28 dans lesquelles les fibres 29, 30, 31 sont collées. Dans le cas d'un jonc 26 en fibre de verre de diamètre moyen 10mm, l'écart entre cotes nominales et réelles peut aisément dépasser 0.2mm pour les rayons $r1$, $r2$, $r3$ et 5° pour les angles $\varphi2$ et $\varphi3$. Dans ce cas, en utilisant les cotes nominales au lieu des cotes réelles pour calculer la courbure à partir des allongements $\varepsilon1$, $\varepsilon2$, $\varepsilon3$, on pourrait générer une erreur de calcul sur la courbure pouvant facilement dépasser 0.003 m$^{-1}$. Cette erreur liée à la géométrie du jonc 26 présente un niveau inacceptable pour l'application visée, ceci d'autant plus que cette erreur vient s'ajouter à d'autres erreurs de mesure et notamment à celles relatives aux mesures d'allongement et aux contraintes résiduelles.

Les erreurs de mesure d'allongement sont celles des réseaux de Bragg et des dispositifs optoélectroniques associés. Les techniques actuelles permettent d'atteindre une précision de mesure d'allongement relatif de l'ordre de 3 $\mu$m/m (c'est-à-dire $3.10^{-6}$ = 0.0003%). Cette erreur sur les mesures d'allongement génère à son tour une erreur sur les mesures de courbure globalement inversement proportionnelle au diamètre moyen du jonc 26. Dans le cas d'un jonc de diamètre 10mm, l'erreur induite sur les courbures est de l'ordre de +/-0.0006 m$^{-1}$.

Même lorsque le jonc 26 est au repos, en l'absence de flexion ou de déformation axiale, les fibres optiques 29, 30, 31 subissent malgré tout des contraintes résiduelles. Ces contraintes résiduelles sont notamment induites dans les fibres optiques 29, 30, 31 lorsque celles-ci sont fixées par collage dont les rainures 28. Le séchage de la colle induit notamment une précontrainte au repos dans les fibres optiques 29, 30, 31. Ces contraintes résiduelles induisent un décalage dans les mesures d'allongement réalisées par les réseaux de Bragg. Ce décalage peut aisément dépasser 100 $\mu$m/m, et donc induire des erreurs de mesure de courbure très importantes, typiquement supérieures à 0,01 m$^{-1}$.

Une solution permettant de corriger les erreurs liées aux contraintes résiduelles consiste à mesurer les trois allongements $\varepsilon1r$, $\varepsilon2r$, $\varepsilon3r$ des trois capteurs optiques 29, 30, 31 lorsque le jonc 26 est au repos et étendu de façon rectiligne, et à soustraire ensuite ces trois valeurs de référence aux mesures d'allongement $\varepsilon1$, $\varepsilon2$, $\varepsilon3$ effectuées en service. Cette correction pose cependant un problème pratique qui limite son efficacité. En effet, le jonc 26 a généralement été enroulé lors de la fabrication et du transport, si bien qu'il est difficile de l'étendre de façon parfaitement rectiligne sans lui imposer une traction, cette traction générant des contraintes qui viennent s'additionner aux contraintes résiduelles précitées et donc fausser partiellement la correction. Il est donc préférable de réduire au maximum la traction lors de l'étape de mesure des allongements $\varepsilon 1r$, $\varepsilon 2r$, $\varepsilon 3r$ liés aux contraintes résiduelles en utilisant des moyens adaptés de maintien du jonc 26 en position rectiligne, par exemple un support du type tube métallique rectiligne dont l'alésage est précisément ajusté au diamètre extérieur du jonc. En pratique, si de telles précautions sont prises, l'erreur de mesure de courbure liée aux contraintes résiduelles peut être ramenée en deçà de + /-0.0005 m$^{-1}$.

Ainsi, dans le cas d'un jonc 26 en fibre de verre de diamètre 10mm, l'erreur totale de mesure de courbure s'obtient en additionnant les différentes erreurs précitées, à savoir une erreur de 0.0005 m$^{-1}$ liée aux contraintes résiduelles (après correction), une erreur de 0.0006 m$^{-1}$ liée aux mesures d'allongement, et enfin dans le cas où les cotes nominales du jonc 26 sont utilisées pour le calcul de courbure, une erreur liée aux imperfections géométriques du jonc 26 pouvant atteindre 0.003 m$^{-1}$. L'erreur totale peut donc dans ce cas dépasser +/-0.004 m$^{-1}$, ce qui n'est pas du tout satisfaisant étant donné que la précision requise pour l'application est + /- 0.0015 m$^{-1}$.

On peut réduire considérablement l'erreur liée aux imperfections géométriques du jonc 26, en déterminant préalablement, les cotes réelles principales du jonc 26, et en utilisant ensuite ces cotes réelles au lieu des cotes nominales pour effectuer les calculs de courbure. De plus, ce procédé permet de déterminer les cotes réelles principales du jonc 26 avec une grande précision, en pratique de l'ordre de quelques centièmes de millimètres, typiquement +/-0.02 mm. Par suite, en utilisant ces cotes réelles au lieu des cotes nominales dans le calcul de courbure, l'erreur liée aux imperfections géométriques du jonc 26 peut être réduite à un niveau inférieur à +/- 0.0005 m$^{-1}$. Dans ce cas, l'erreur totale de mesure de courbure peut être maintenue à un niveau satisfaisant de l'ordre de + /-0.0015 m$^{-1}$,

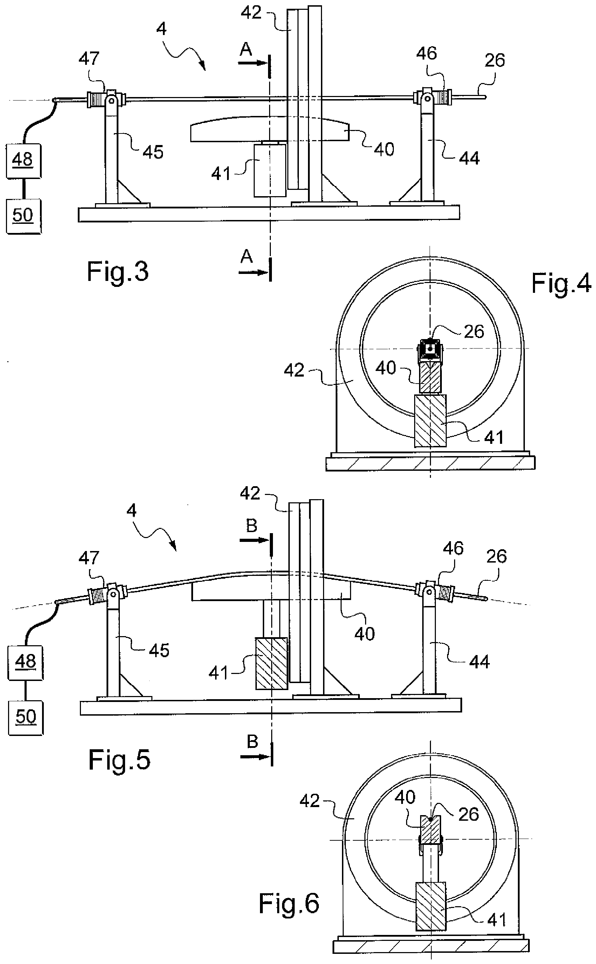

Les figures 3 et 5 représentent schématiquement en vue de côté un banc d'étalonnage 4 du dispositif de contrôle. Les figures 4 et 6 représentent ce même banc 4 en vue de face. Le banc d'étalonnage 4 comprend un élément d'étalonnage 40 présentant une face destinée à rentrer en contact avec la tige 26. Cette face présente une gorge s'étendant selon un rayon de courbure prédéfini, par exemple de l'ordre de 10 mètres. Ce rayon de courbure sera suffisamment réduit pour limiter l'amplitude des erreurs d'étalonnages. La gorge est destinée à recevoir la tige 26 pour lui appliquer ce rayon de courbure.

L'élément d'étalonnage 40 est monté sur une couronne de guidage 42, de façon à décrire un cercle autour de la tige 26. La rotation de l'élément d'étalonnage 40 s'effectue autour de l'axe central C. Le banc d'étalonnage 4 comprend des supports 44 et 45 éloignés l'un de l'autre. L'élément d'étalonnage 40 est disposé sensiblement à mi-distance entre les supports 44 et 45. L'élément d'étalonnage 40 est monté à rotation sur la couronne de guidage 42 par l'intermédiaire d'un vérin 41. Le vérin 41 permet de déplacer l'élément d'étalonnage 40 radialement, soit pour l'éloigner soit pour l'appliquer contre la tige 26. Les supports 44 et 45 présentent respectivement des articulations 46 et 47, destinées à définir les degrés de liberté de la tige 26 par rapport au banc 4. La zone de mesure de courbure en cours d'étalonnage, constituée de trois réseaux de Bragg ménagés dans trois les fibres optiques est avantageusement disposée au voisinage du centre de l'élément 40, à mi-distance entre les supports 44 et 45.

Durant l'étalonnage, les fibres optiques de la tige 26 sont reliées à un dispositif optoélectronique 48 de mesure des longueurs d'onde caractéristiques des réseaux de Bragg. Le dispositif 48 détermine en temps réel, à partir de ces longueurs d'onde, la déformation axiale des réseaux de Bragg de chacune des fibres 29, 30, 31, selon une méthode connue en soi de l'homme du métier. Les déformations mesurées varient typiquement entre plus ou moins 1500 $\mu$m/m (+/-0.15%). Le dispositif 48 est connecté à un système informatique 50 de façon à enregistrer les mesures de déformation des fibres pour les différentes orientations du plan de flexion. Le système informatique 50 est muni de moyens de traitement permettant d'extrapoler une fonction sinusoïdale de la déformation de chaque capteur en fonction de l'angle du plan de flexion.

Sur les figures 3 et 4, la tige 26 est au repos. Le vérin 41 maintient l'élément d'étalonnage 40 éloigné de la tige 26. Sur les figures 5 et 6, la tige 26 est fléchie selon un rayon de courbure prédéfini par l'élément d'étalonnage 40. Le vérin 41 maintient l'élément d'étalonnage 40 appliqué contre la tige 26.

Durant l'étalonnage, l'élément 40 est disposé en différentes positions angulaires autour de l'axe C. Dans chacune de ces positions angulaires, l'élément 40 vient fléchir la tige 26 de façon à lui appliquer son rayon de courbure. A chaque position angulaire de l'élément 40 correspond une orientation d'un plan de flexion de la tige 26. L'élément 40 pourra fléchir la tige 26 selon des incréments angulaires. L'élément 40 pourra notamment appliquer une flexion tous les 5, 10 ou 20° autour de la tige 26.

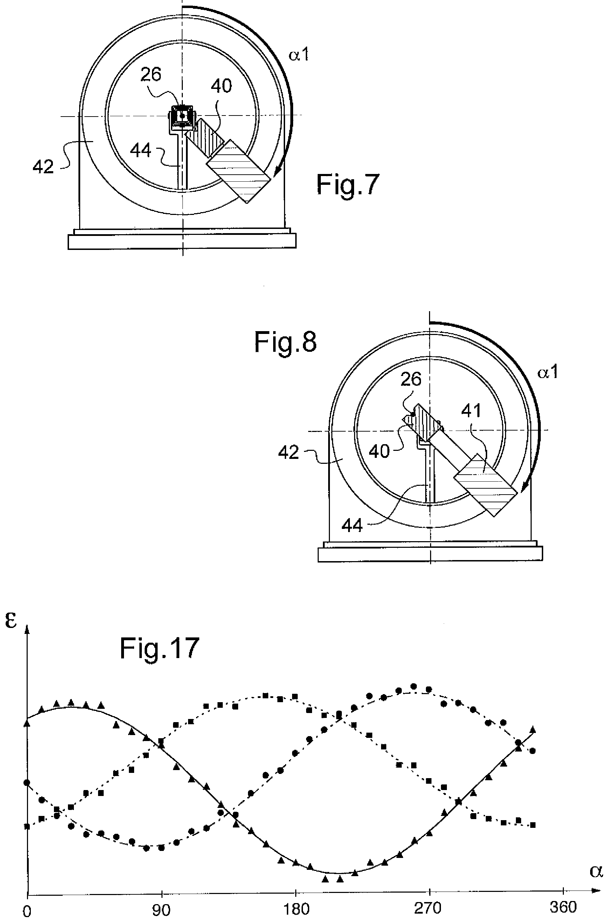

Sur les figures 7 et 8, l'élément 40 est placé dans une position angulaire décalée d'un angle $\alpha 1$ par rapport à la verticale. Sur la figure 8, l'élément 40 est actionné par le vérin 41 et vient fléchir la tige 26 de façon à lui appliquer son rayon de courbure. Le plan de flexion de la tige 26 présente une inclinaison de l'angle $\alpha 1$. Durant cette flexion, les déformations induites par la flexion sont mesurées par les trois capteurs.

Avantageusement, entre deux flexions successives de la tige 26, celle-ci est ramenée dans une position de repos sensiblement rectiligne. Ainsi, on évite d'appliquer des efforts de torsion sur la tige 26 susceptibles d'introduire des erreurs de mesure. Comme illustré aux figures 3, 4 et 7, l'élément 40 est maintenu éloigné de la tige 26. Dès lors, la tige 26 est ramenée vers sa position de repos où elle est sensiblement rectiligne. On peut également envisager qu'un gabarit rectiligne rappelle la tige 26 vers sa position au repos.

Dans l'exemple, la face de l'élément d'étalonnage 40 venant en contact avec la tige 26 est convexe. On peut également envisager d'appliquer le rayon de courbure prédéfini en maintenant la tige 26 en position entre l'élément d'étalonnage 40 et un étalon concave disposé en vis-à-vis.

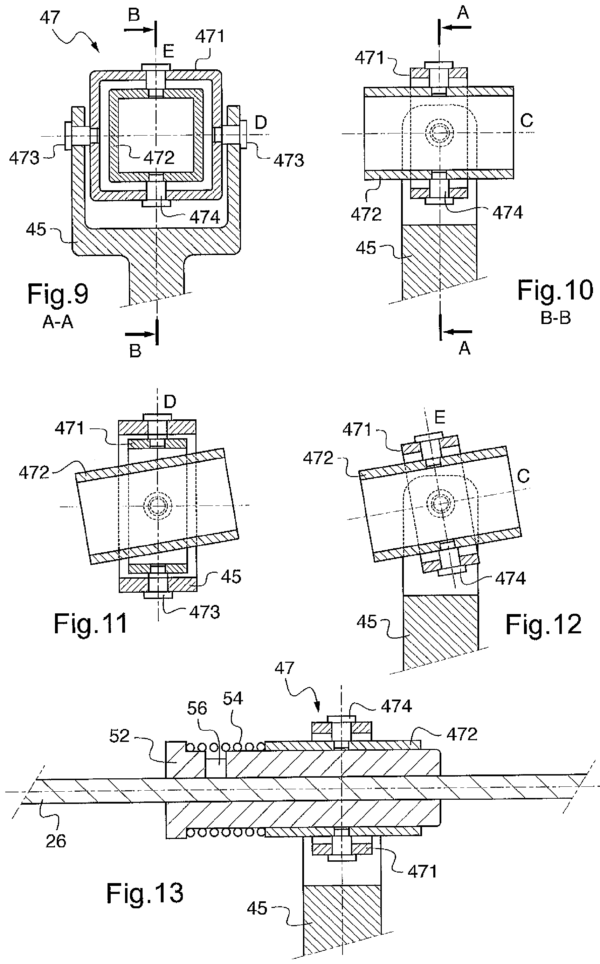

Les figures 9 à 12 représentent la structure d'un exemple préférentiel du support 45. Cette structure est destinée à limiter les moments de flexion dans la tige 26 au niveau de son maintien en position par rapport au support 45, en permettant une rotation de la tige 26 autour d'axes perpendiculaires à son axe central C. L'extrémité supérieure du support 45 présente une extrémité supérieure en forme de fourche. L'articulation 47 est montée pivotante entre deux faces opposées de la fourche. L'articulation 47 comprend des premier et deuxième cadres 471 et 472. Le premier cadre 471 est monté pivotant par rapport au support 45 autour d'un axe D sensiblement perpendiculaire à l'axe central C de la tige 26 au repos. Le premier cadre 471 est monté pivotant par l'intermédiaire d'arbres 473. Le guidage en rotation des arbres 473 par rapport à la fourche peut être réalisé au moyen de roulements à billes ou de cages à aiguilles afin de limiter les frottements et les contraintes parasites dans la tige 26 durant sa flexion. Le second cadre 472 est monté pivotant par rapport au premier cadre 471 autour d'un axe E sensiblement perpendiculaire aux axes C et D lorsque la tige 26 est au repos. Le second cadre 472 est monté pivotant par l'intermédiaire d'arbres 474. Le guidage en rotation des arbres 474 par rapport au premier cadre 471 peut également être réalisé au moyen de roulements à billes ou de cages à aiguilles afin de limiter les frottements et les contraintes parasites dans la tige 26 durant sa flexion. Les axes C, D et E sont séquents.

Sur les figures 9 et 10, l'articulation 47 est disposée dans sa position lorsque la tige 26 est au repos. Sur la figure 11, une flexion est appliquée sur la tige 26 dans un plan de flexion incluant l'axe D. Sur la figure 12, une flexion est appliquée à la tige 26 dans un plan de flexion normal à l'axe D.

Dans ce mode de réalisation, l'élément 40 est directement appliqué contre la tige 26. La tige 26 adopte ainsi le rayon de courbure prédéfini avec une très grande précision. Cependant, ce mode d'application peut induire une légère traction axiale dans la tige 26. Pour limiter celle-ci, le support 44 présentera avantageusement une structure similaire au support 45, permettant la rotation de la tige 26 selon deux axes perpendiculaires à l'axe central C.

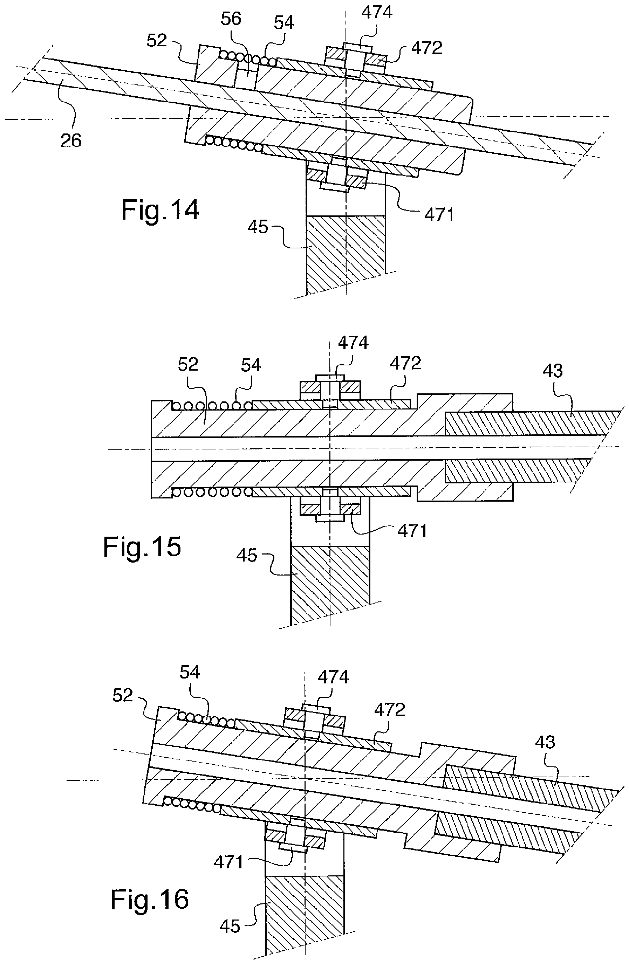

Les figures 13 et 14 représentent le support 45 muni d'un manchon 52 par l'intermédiaire duquel la tige 26 est montée dans l'articulation 47. Le manchon 52 présente une section transversale dont la périphérie est de forme sensiblement rectangulaire. Le deuxième cadre 472 présente un alésage de forme correspondante, afin d'empêcher toute rotation du manchon 52 par rapport au deuxième cadre 472. L'ajustement du manchon 52 par rapport au deuxième cadre 472, son état de surface et le matériau présent à sa périphérie seront choisis de sorte que le manchon 52 coulisse avec un minimum de frottements dans le second cadre 472 selon l'axe central C. Le manchon 52 présente un alésage longitudinal dans sa partie médiane. Cet alésage longitudinal est traversé par la tige 26.

Le manchon 52 dispose d'un organe 56 venant comprimer la tige 26 afin d'interdire une rotation de celle-ci autour de l'axe central C. On peut également envisager d'interdire la rotation de la tige 26 autour de l'axe C par d'autres moyens. On peut notamment envisager d'utiliser un manchon présentant une rainure longitudinale débouchant sur l'alésage longitudinal. Par des moyens de serrage, on peut rapprocher les faces de cette rainure afin de réduire le diamètre de l'alésage et ainsi bloquer la rotation de la tige 26.

Afin d'appliquer une traction constante dans la tige 26 et afin de rappeler celle-ci vers sa position au repos entre deux flexions, le banc 4 présente avantageusement des moyens de rappel induisant une traction sur la tige selon l'axe central C. Dans l'exemple illustré, les moyens de rappel comprennent un ressort de compression 54. Le ressort 54 est destiné à être comprimé entre une butée du manchon 52 et une extrémité longitudinale du deuxième cadre 472. Le manchon 52 pourra présenter localement une section transversale dont la périphérie est circulaire, afin de recevoir un ressort 54 hélicoïdal.

Il n'est pas nécessaire que le support 44 soit également muni d'un ressort de rappel. La tige 26 pourra ainsi être montée dans l'articulation 46 par l'intermédiaire d'un manchon non illustré encastré dans cette articulation 46.

Sur la figure 13, la tige 26 est au repos. Le ressort 54 peut éventuellement appliquer une tension dans cette position, afin de garantir que la tige 26 reste droite contre le support au repos. Une mesure de déformation de la tige 26 au repos pourra être effectuée pour déterminer des décalages de mesure induits par cette tension. Sur la figure 14, une flexion est appliquée sur la tige 26. Du fait de l'allongement de la partie de la tige présente entre les supports 44 et 45, le manchon 52 se translate selon l'axe C en direction du support 44. Ainsi, le ressort 54 est comprimé.

Dans l'exemple illustré aux figures 13 et 14, les moyens de rappel de la tige sont disposés au niveau de l'articulation 47. Cependant, d'autres alternatives peuvent également être envisagées. On peut notamment envisager qu'un des supports 44 ou 45 soit monté en translation selon l'axe C par rapport au sol, avec des moyens de rappel.

Les figures 15 et 16 représentent une alternative de maintien de la tige 26 par les supports 44 et 45. Afin de protéger la tige 26, celle-ci est disposée dans une gaine flexible 43 qui s'étend entre les supports 44 et 45. Le manchon 52 loge une extrémité de la gaine 43 et un épaulement forme une butée pour les translations de la gaine flexible 43 selon l'axe C. La gaine flexible 43 est immobilisée en rotation autour de l'axe C par tous moyens appropriés. La gaine flexible 43 présente un diamètre intérieur légèrement supérieur au diamètre extérieur de la tige 26, l'écart entre ces deux diamètres devant être préférentiellement inférieur à 3 mm afin de minimiser les différences de courbure entre la gaine flexible 43 et la tige 26. Ainsi, par exemple, dans le cas où l'élément d'étalonnage 40 présente un rayon de courbure égal à 5m, où la tige 26 présente un diamètre extérieur égal à 10mm et où la gaine flexible 43 présente un diamètre intérieur égal à 12mm, la différence maximale de courbure entre la tige 26 et la gaine flexible 43 est de l'ordre de 0.00008 $m^{-1}$, si bien que l'erreur d'étalonnage liée à cette différence est faible par rapport à la précision visée (+ /- 0.0015 $m^{-1}$). De préférence, la gaine flexible 43 sera réalisée de sorte que les frottements avec la tige 26 soient réduits au maximum. Le diamètre intérieur de la gaine flexible 43 pourra notamment être revêtu ou constitué d'un matériau à faible coefficient de frottement tel que du polytétrafluoroéthylène. Dans cet exemple, l'élément d'étalonnage 40 vient en contact avec la gaine flexible 43 pour appliquer son rayon de courbure. Ainsi, la tige 26 est protégée du contact avec l'élément 40. Comme dans l'exemple des figures 13 et 14, un ressort de rappel 54 est placé en compression entre le manchon 52 et le deuxième cadre 472 selon l'axe C. Des moyens non représentés permettent d'empêcher la rotation selon l'axe C de la tige 26 par rapport à la gaine flexible 43. Ce degré de liberté en rotation selon l'axe C peut par exemple être bloqué en comprimant localement la tige 26 contre le manchon 52 avec des moyens de serrage démontables.

Dans le mode de réalisation utilisant la gaine flexible 43, la correction des erreurs liées aux contraintes résiduelles peut être effectuée par des mesures d'allongement lorsque la tige revient dans sa position rectiligne. Du fait de la présence de la gaine 43, les contraintes axiales sur la tige seront relativement limitées. Avantageusement, une mesure d'allongement peut être réalisée suite à différents angles de courbure appliqués à la tige. Les mesures d'allongement présenteront ainsi une certaine redondance, garantissant la précision du calcul des contraintes résiduelles.

Les moyens de traitement utilisent les nuages de points de mesure pour déterminer de façon connue en soi des fonctions sinusoïdales ayant une période connue à l'avance, dans le cas présent 360° ou $2\pi$ radians. Chaque fonction pourra notamment être déterminée au moyen d'une méthode des moindres carrés itérative, en imposant par exemple la période de la fonction sinusoïdale à déterminer. L'utilisation d'un nombre important de mesures introduit une redondance dans l'étalonnage du dispositif de contrôle. Les fonctions sinusoïdales extrapolées de ces mesures présentent donc une grande précision, les erreurs de type gaussien s'éliminant.

Une méthode de calcul de la fonction sinusoïdale basée sur les séries de Fourier est également décrite ci-dessous. Cette méthode est basée sur la décomposition en séries de Fourier d'une fonction périodique interpolant les points de mesure.

Par la suite, i sera l'indice d'une mesure de flexion, i variant entre 1 et n, n étant le nombre de mesures de flexion effectuées. $\alpha_i$ désignera l'angle du plan de courbure pour la mesure d'indice i.

Dans cet exemple, on se basera sur des mesures de flexion selon des plans de flexion espacées d'un incrément d'angle $\Delta\alpha$ fixe. $\Delta\alpha$ est ainsi défini par $\Delta\alpha = 2\pi/n$ (en radians). On peut ainsi exprimer $\alpha_i$ par $\alpha_i = (i-1)^* \Delta\alpha = (i-1)^* 2\pi/n$. Ainsi, pour $\Delta\alpha = 5°$ (en degrés), n=72. L'utilisation de plans de flexion distants d'un angle fixe permet de faciliter l'automatisation du banc d'étalonnage et de simplifier très fortement les calculs d'extrapolation de la fonction sinusoïde.

On exprimera la fonction sinusoïdale $\varepsilon_j$ de déformation à extrapoler pour un capteur d'indice j sous la forme suivante :

$$\varepsilon_j = A_{j0} + A_{j1}*\cos(\alpha) + B_{j1}*\sin(\alpha)$$

$$A_{j0} = \frac{1}{2\pi}\sum_{i=1}^{n}(\Delta\alpha * \varepsilon_{ji}) = \frac{1}{n}\sum_{i=1}^{n}\varepsilon_{ji}$$

$A_{j0}$ correspond à une valeur de décalage du capteur j, valeur liée d'une part aux contraintes résiduelles de collage du capteur j sur la tige 26, et d'autre part à la tension appliquée par le ressort de rappel 54. Dans le cas ou le banc d'étalonnage est équipé d'une gaine flexible 43 présentant un faible coefficient de frottement, $A_{j0}$ est essentiellement lié aux contraintes résiduelles de collage des fibres.

$$A_{j1} = \frac{1}{\pi}\sum_{i=1}^{n}(\Delta\alpha * \varepsilon_{ji} * \cos\alpha_i) = \frac{\Delta\alpha}{\pi}\sum_{i=1}^{n}\varepsilon_{ji} * \cos\alpha_i = \frac{2}{n}\sum_{i=1}^{n}\varepsilon_{ji} * \cos\alpha_i$$

$A_{j1}$ est la composante en phase de l'harmonique fondamentale du capteur j.

$$B_{j1} = \frac{1}{\pi} \sum_{i=1}^{n} (\Delta\alpha * \varepsilon_{ji} * \sin\alpha_i) = \frac{\Delta\alpha}{\pi} \sum_{i=1}^{n} \varepsilon_{ji} * \sin\alpha_i = \frac{2}{n} \sum_{i=1}^{n} \varepsilon_{ji} * \sin\alpha_i$$

$B_{j1}$ est la composante en quadrature de phase de l'harmonique fondamentale du capteur j.

$\varepsilon_{ji}$ est la mesure de déformation d'indice i du capteur d'indice j.

La fonction sinusoïdale $\varepsilon_j$ peut également s'exprimer sous la forme suivante

$$\varepsilon_j = A_{j0} + D_{j1} * \cos(\alpha - \varphi_j)$$

$\varphi_j$ étant l'écart angulaire entre le capteur d'indice j et le capteur d'indice 1. $\varphi$ est donc nul. La valeur $D_{j1}$ est extrapolée des valeurs calculées auparavant, comme suit :

$$D_{j1} = \sqrt{A_{j1}^2 + B_{j1}^2}$$

Et :

$$\varphi_j = Arctan(B_{j1}/A_{j1}) \text{ si } A_{j1} \neq 0$$

$$\varphi_j = \pi/2 \text{ si } A_{j1} = 0$$

La figure 17 représente des nuages de points de mesure de déformations obtenus lors d'un cycle d'étalonnage, et des fonctions sinusoïdales extrapolées de ces points. $\varepsilon_1$, $\varepsilon_2$, $\varepsilon_3$ les déformations respectives des fibres 30 sont ainsi exprimées sous forme de fonctions sinusoïdales de la forme suivante :

$$\varepsilon_1 = D_{11} \cos(\alpha) + A_{10}$$

$$\varepsilon_2 = D_{21} \cos(\alpha - \varphi_2) + A_{20}$$

$$\varepsilon_3 = D_{31} \cos(\alpha - \varphi_3) + A_{30}$$

Les termes $D_{11}$, $D_{21}$ et $D_{31}$ permettent de calculer les cotes réelles r1, r2, r3 représentées à la figure 2. En effet :

$$r_1 = R * D_{11}$$

$$r_2 = R * D_{21}$$

$$r_3 = R * D_{31}$$

R étant la courbure appliquée au centre C de la tige 26 par l'élément d'étalonnage 40. Ce paramètre est donc connu à l'avance.

Les déphasages $\varphi_2$ et $\varphi_3$ entre les sinusoïdes sont respectivement égaux aux cotes angulaires $\varphi_2$ et $\varphi_3$ représentée sur la figure 2.

Les termes $A_{10}$, $A_{20}$ et $A_{30}$ sont liés aux contraintes résiduelles de collage, comme cela a été expliqué plus haut.

Pour accroître la précision de l'étalonnage, des fonctions sinusoïdales pourront être extrapolées pour des mesures réalisées avec d'autres rayons de courbure, en utilisant des éléments d'étalonnage présentant des rayons de courbure différents.

Ce procédé d'étalonnage peut naturellement s'appliquer à une tige comportant un nombre de capteurs optiques supérieur à 3, par exemple une tige comportant 4 fibres comme celle divulguée dans la publication OTC19051 référencée plus haut.

Dans ce cas, on obtient à l'issue d'un cycle d'étalonnage autant de nuages de points de mesure de déformations et autant de sinusoïdes extrapolant ces points, qu'il y a de capteurs optiques. La demi amplitude $D_{j1}$ de chaque sinusoïde numéro j permet de déterminer les distances rj séparant le capteur optique correspondant de l'axe central C de la tige déformable ($r_j = R * D_{j1}$ ). Le déphasage $\varphi_j$ entre la sinusoïde numéro j et celle numéro 1 est égal à la cote angulaire correspondante entre le capteur optique numéro j et celui numéro 1.

Un tel procédé d'étalonnage permet d'obtenir un calibrage précis du dispositif de contrôle, même en présence d'autres sources de dispersion, comme une gaine flexible de protection entourant la tige 26. Les données de calibration sont mémorisées dans le dispositif de traitement en temps réel des signaux optiques des différents capteurs lorsque le dispositif de contrôle est en service. Les cotes réelles calculées selon un tel procédé d'étalonnage permettent de garantir des calculs de courbure d'une très grande précision.

Pour illustrer ces calculs, prenons l'exemple d'une tige comportant 3 capteurs optiques du type de celle de la Figure 2, et qui aurait été préalablement soumise au procédé d'étalonnage faisant l'objet de la présente demande. Les cotes réelles r1, r2, r3 , $\varphi2$ et $\varphi3$ ont donc été déterminées avec précision. De plus, les décalages (offsets) $\varepsilon1r$, $\varepsilon2r$, $\varepsilon3r$ sur les mesures d'allongement liés aux contraintes résiduelles ont aussi été déterminés lorsque la tige est étendue rectilignement et au repos selon la méthode décrite plus haut. Lorsque la tige est en service, les trois capteurs optiques fournissent à intervalle temporel constant, par exemple tous les dixièmes de seconde, trois mesures d'allongement $\varepsilon1$, $\varepsilon2$, $\varepsilon3$. A partir de ces trois mesures d'allongement, il faut calculer les trois inconnues que sont le rayon de courbure $\rho$ de la tige, l'orientation angulaire $\psi$ du plan de flexion par rapport à la tige, et enfin l'allongement axial homogène $\varepsilon$ de la tige. En pratique, ceci revient à résoudre le système d'équations suivant :

$$\varepsilon1 = \varepsilon1r + \varepsilon + (r1/ \rho) \cos(\psi)$$

$$\varepsilon2 = \varepsilon2r + \varepsilon + (r2/ \rho) \cos(\psi- \varphi2)$$

$$\varepsilon3 = \varepsilon3r + \varepsilon + (r3/ \rho) \cos(\psi- \varphi3)$$

Ce système de 3 équations à 3 inconnues peut être résolu analytiquement, par exemple en commençant par calculer l'angle $\psi$ de la façon suivante :

$$tg(\Psi) = \frac{-L + M \dfrac{\varepsilon'_1/2 + \varepsilon'_3/2 - \varepsilon'_2}{\varepsilon'_1 - \varepsilon'_3}}{K + N \dfrac{\varepsilon'_1/2 + \varepsilon'_3/2 - \varepsilon'_2}{\varepsilon'_1 - \varepsilon'_3}}$$

Avec:

$$\varepsilon'_1 = \varepsilon1 - \varepsilon1r$$

$$\varepsilon'_2 = \varepsilon2 - \varepsilon2r$$

$$\varepsilon'_3 = \varepsilon3 - \varepsilon3r$$

$$\beta2 = \varphi2 - \pi/2$$

$$\beta 3 = \varphi 3 - \pi$$

$$K = r_2 \cos(\beta_2) + \frac{r_3 \sin(\beta_3)}{2}$$

$$L = r_2 \sin(\beta_2) + \frac{r_1 - r_3 \cos(\beta_3)}{2}$$

$$M = r_1 + r_3 \cos(\beta_3)$$

$$N = r_3 \sin(\beta_3)$$

Une fois l'angle $\psi$ ainsi calculé, on peut en déduire le rayon de courbure $\rho$ de la façon suivante :

$$\rho = \frac{K \sin(\Psi) + L \cos(\Psi)}{\varepsilon'_1/2 + \varepsilon'_3/2 - \varepsilon'_2}$$

Enfin, une fois $\psi$ et $\rho$ calculés, l'allongement axial homogène peut être aisément déduit :

$$\varepsilon = \varepsilon_1 - \varepsilon_{1r} - (r1/\rho) \cos(\psi)$$

Ces calculs peuvent être effectués à très grande vitesse par un micro-ordinateur de puissance courante. En pratique, les temps de calculs sont négligeables devant les temps de mesure des allongements. Il est ainsi possible de mesurer en temps réel plusieurs centaines de courbures par seconde.

Du fait de l'amélioration sensible de la précision du dispositif de contrôle, un nombre réduit de ces dispositifs pourra être monté sur un raidisseur ou un ouvrage d'art sans nuire fortement à la précision des mesures effectuées.

Concernant le procédé d'étalonnage, on pourra également déterminer des harmoniques de rang plus élevé, sur la base de ces mêmes mesures. En fonction du rapport entre l'amplitude de ces harmoniques et l'amplitude de l'harmonique fondamentale, on pourra déterminer si la qualité de l'étalonnage est suffisante pour déterminer avec précision les cotes réelles de la tige.

A partir de la méthode basée sur les séries de Fourier détaillée auparavant, on pourra notamment calculer les principaux harmoniques de rang supérieur à 1, par exemple les harmoniques impairs de rang compris entre 3 et 11, et les comparer avec l'harmonique fondamentale (de rang 1) en calculant un taux d'harmoniques égal au rapport entre d'une part la moyenne harmonique des amplitudes des harmoniques de rang supérieur à 1 et d'autre part l'amplitude de l'harmonique fondamentale. Si ce taux d'harmoniques dépasse un certain seuil, ceci signifie que le nuage de points correspondant est trop éloigné d'une sinusoïde et qu'il y a probablement eu un problème pendant le cycle d'étalonnage (par exemple le blocage d'une articulation ou d'un ressort de rappel). Dans ce cas, le banc d'étalonnage exigera automatiquement de vérifier les montages mécaniques et de réexécuter un cycle de mesures de flexion.

Bien que l'invention ait été décrite en particulier avec des capteurs optiques formés de réseaux de Bragg, d'autres capteurs optiques connus peuvent être utilisés, par exemple des capteurs de mesure répartie de déformations axiales utilisant une méthode de réflectométrie Brillouin.

## Revendications

1. Procédé d'étalonnage d'un dispositif de contrôle de la courbure d'une structure, ce dispositif de contrôle étant muni d'une tige déformable (26) présentant un axe central (C) et d'au moins trois capteurs optiques (29, 30, 31) maintenus appliqués contre le pourtour de ladite tige (26), comprenant les étapes consistant à :

   - pour différentes orientations successives de plans de flexion autour dudit axe central :

- fléchir la tige (26) selon un même rayon de courbure;
- mesurer la déformation des capteurs (29, 30, 31) lors de la flexion;

- extrapoler des déformations mesurées, une fonction sinusoïdale de la déformation pour chaque capteur en fonction de l'orientation du plan de flexion ;
- calculer des coefficients de correction d'erreur en fonction du décalage angulaire entre les fonctions sinusoïdales extrapolées et en fonction des amplitudes des courbes sinusoïdales extrapolées.

2. Procédé d'étalonnage selon la revendication 1 **caractérisé en ce que** ladite structure est un raidisseur (18) d'une conduite flexible marine.

3. Procédé d'étalonnage selon la revendication 1 **caractérisé en ce que** ladite structure est un ouvrage d'art.

4. Procédé d'étalonnage selon l'une quelconque des revendications 1 à 3, dans lequel le calcul des coefficients de correction d'erreur comprend le calcul des positions réelles des au moins trois capteurs optiques par rapport à l'axe central (C) en fonction des amplitudes des courbes sinusoïdales extrapolées.

5. Procédé d'étalonnage selon la revendication 1 à 4 , dans lequel la tige (26) est ramenée dans une position sensiblement rectiligne après chaque flexion.

6. Procédé d'étalonnage selon l'une quelconque des revendications précédentes, dans lequel la tige (26) est fléchie par application contre son pourtour d'un élément d'étalonnage (40) présentant une courbure prédéfinie.

7. Procédé d'étalonnage selon la revendication 6, dans lequel la tige (26) est immobilisée en rotation par rapport à son axe central (C), l'élément d'étalonnage (40) étant monté à rotation autour de cet axe central.

8. Procédé d'étalonnage selon la revendication 6 ou 7, dans lequel deux supports assurent le maintien en position de la tige, l'élément d'étalonnage (40) étant appliqué contre la tige (26) entre les supports, les supports autorisant le pivotement de la tige autour de deux axes sensiblement perpendiculaires à l'axe central (C) de la tige.

9. Procédé d'étalonnage selon l'une quelconque des revendications précédentes, dans lequel chaque capteur optique (30) comprend un tronçon de fibre optique comprenant un réseau de Bragg et maintenu appliqué contre le pourtour de la tige.

10. Procédé d'étalonnage selon la revendication 9, dans lequel les réseaux de Bragg des différents tronçons de fibre sont disposés au même niveau selon l'axe central de la tige.

11. Procédé d'étalonnage selon la revendication 10, dans lequel la flexion est appliquée au niveau desdits réseaux de Bragg.

12. Procédé d'étalonnage selon l'une quelconque des revendications précédentes, dans lequel l'extrapolation de la fonction sinusoïdale d'un capteur établit une fonction du type :

$$\varepsilon_j = A_{j0} + A_{j1}*\cos(\alpha) + B_{j1}*\sin(\alpha)$$

$A_{j1}$ étant la composante en phase et $B_{j1}$ la composante en quadrature de phase de l'harmonique fondamentale, ces composantes étant déterminées par une méthode de séries de Fourier sur la base des mesures de déformation, $\alpha$ étant l'orientation du plan de flexion autour de l'axe central.

13. Procédé d'étalonnage selon la revendication 12, dans lequel au moins une harmonique de rang supérieur à l'harmonique fondamentale est déterminée par une méthode de séries de Fourier, et dans lequel les mesures de déformation sont répétées si le rapport entre l'harmonique de rang supérieur et l'harmonique fondamentale dépasse un seuil.

**Patentansprüche**

1. Verfahren zur Kalibrierung einer Vorrichtung zum Prüfen der Biegung einer Struktur, wobei diese Prüfvorrichtung mit einem verformbaren Stab (26), der eine mittlere Achse (C) aufweist, und mit mindestens drei optischen Sensoren (29, 30, 31), die gegen den Umfang des Stabs (26) angelegt gehalten werden, versehen ist, wobei das Verfahren die folgenden Schritte umfasst:

   - für verschiedene aufeinander folgende Orientierungen von Biegeebenen um die mittlere Achse:

      • Biegen des Stabs (26) gemäß einem gleichen Biegeradius;
      • Messen der Verformung der Sensoren (29, 30, 31) beim Biegen;
      • Extrapolieren aus den gemessenen Verformungen einer Sinusfunktion der Verformung für jeden Sensor in Abhängigkeit von der Orientierung der Biegeebene;
      • Berechnen der Fehlerkorrekturkoeffizienten in Abhängigkeit vom Winkelversatz zwischen den extrapolierten Sinusfunktionen und in Abhängigkeit von den Amplituden der extrapolierten Sinuskurven.

2. Kalibrierungsverfahren nach Anspruch 1, **dadurch gekennzeichnet, dass** die Struktur ein Versteifungselement (18) einer flexiblen Meerwasserleitung ist.

3. Kalibrierungsverfahren nach Anspruch 1, **dadurch gekennzeichnet, dass** die Struktur ein Bauwerk ist.

4. Kalibrierungsverfahren nach einem der Ansprüche 1, bis 3, bei dem der Fehlerkorrekturkoeffizient das Berechnen der tatsächlichen Positionen der mindestens drei optischen Sensoren relativ zu der mittleren Achse (C) in Abhängigkeit von den Amplituden der extrapolierten Sinuskurven umfasst.

5. Kalibrierungsverfahren nach Anspruch 1, bis 4, bei dem der Stab (26) nach jedem Biegen wieder in eine im Wesentlichen geradlinige Position gebracht wird.

6. Kalibrierungsverfahren nach einem der vorhergehenden Ansprüche, bei dem der Stab (26) durch Anlegen eines Kalibrierungselements (40), das eine vorbestimmte Biegung aufweist, gegen seinen Umfang gebogen wird.

7. Kalibrierungsverfahren nach Anspruch 6, bei dem der Stab (26) in seiner Drehung relativ zu seiner mittleren Achse (C) gesperrt wird, wobei das Kalibrierungselement (40) um diese mittlere Achse drehbar gelagert ist.

8. Kalibrierungsverfahren nach Anspruch 6 oder 7, bei dem zwei Träger den Halt des Stabs in Position sicherstellen, wobei das Kalibrierungselement (40) gegen den Stab (26) zwischen den Trägern angelegt wird, wobei die Träger das Schwenken des Stabs um zwei zu der mittleren Achse (C) des Stabs im Wesentlichen senkrechte Achsen erlauben.

9. Kalibrierungsverfahren nach einem der vorhergehenden Ansprüche, bei dem jeder optische Sensor (30) einen Lichtwellenleiterabschnitt umfasst, der ein Bragg-Netz enthält und gegen den Umfang des Stabes angelegt gehalten wird.

10. Kalibrierungsverfahren nach Anspruch 9, bei dem die Bragg-Netze der verschiedenen Faserabschnitte gemäß der mittleren Achse des Stabs auf der selben Höhe angeordnet sind.

11. Kalibrierungsverfahren nach Anspruch 10, bei dem die Biegung im Bereich der Bragg-Netze ausgeübt wird.

12. Kalibrierungsverfahren nach einem der vorhergehenden Ansprüche, bei dem das Extrapolieren der Sinusfunktion eines Sensors eine Funktion des folgenden Typs erstellt:

$$\varepsilon_j = A_{j0} + A_{j1} * \cos(\alpha) + B_{j1} * \sin(\alpha)$$

wobei $A_{j1}$, die Komponente in Phase und $B_{j1}$, die Komponente in Phasenquadratur der Grundschwingung ist, wobei diese Komponenten durch ein Fourier-Reihen Verfahren auf der Basis der Verformungsmessungen bestimmt werden, wobei $\alpha$ die Orientierung der Biegeebene um die mittlere Achse ist.

**13.** Kalibrierungsverfahren nach Anspruch 12, bei dem mindestens eine Schwingung höherer Ordnung als die Grundschwingung durch ein Fourier-Reihen Verfahren bestimmt wird und bei dem die Verformungsmessungen wiederholt werden, wenn das Verhältnis zwischen der Schwingung höherer Ordnung und der Grundschwingung einen Schwellenwert übersteigt.

**Claims**

**1.** A method of calibrating a device for monitoring the curvature of a structure, this monitoring device being equipped with a deformable rod (26) that has a central axis (C), and with at least three optical sensors (29, 30, 31) kept pressed against the periphery of said rod (26), comprising the steps involving:

   - for various successive orientations of planes of bending about said central axis:

      - bending the rod (26) to the same bend radius;
      - measuring the deformation of the sensors (29, 30, 31) during the bending;

   - extrapolating from the measured deformations, a sinusoidal function of the deformation for each sensor as a function of the orientation of the plane of bending;
   - calculating error correction coefficients as a function of the angular offset between the extrapolated sinusoidal functions and as a function of the amplitudes of the extrapolated sinusoidal curves.

**2.** The calibration method as claimed in claim 1, **characterized in that** said structure is a marine flexible pipe bend stiffener (18).

**3.** The calibration method as claimed in claim 1, **characterized in that** said structure is a construction.

**4.** The calibration method as claimed in claims 1 to 3, in which the calculating of the error correction coefficients involves calculating the actual positions of the at least three optical sensors with respect to the central axis (C) as a function of the amplitudes of the extrapolated sinusoidal curves.

**5.** The calibration method as claimed in claims 1 to 4, in which the rod (26) is returned to a substantially straight position after each bending operation.

**6.** The calibration method as claimed in any one of the preceding claims, in which the rod (26) is bent by pressing a calibration element (40) of predefined curvature against its periphery.

**7.** The calibration method as claimed in claim 6, in which the rod (26) is prevented from rotating with respect to its central axis (C), the calibration element (40) being mounted so that it can rotate about this central axis.

**8.** The calibration method as claimed in claim 6 or 7, in which two supports hold the rod in position, the calibration element (40) being pressed against the rod (26) between the supports, the supports allowing the rod to pivot about two axes which are substantially perpendicular to the central axis (C) of the rod.

**9.** The calibration method as claimed in any one of the preceding claims, in which each optical sensor (30) comprises a length of optical fiber comprising a Bragg grating and kept pressed against the periphery of the rod.

**10.** The calibration method as claimed in claim 9, in which the Bragg gratings of the various lengths of fiber are arranged at the same level along the central axis of the rod.

**11.** The calibration method as claimed in claim 10, in which the bending is applied in the region of said Bragg gratings.

**12.** The calibration method as claimed in any one of the preceding claims, in which the extrapolation of the sinusoidal function of a sensor establishes a function of the type:

$$\varepsilon_j = A_{j0} + A_{j1} * \cos(\alpha) + B_{j1} * \sin(\alpha)$$

$A_{j1}$ being the phase component and $B_{j1}$ the phase quadrature component of the fundamental harmonic, these components being determined by a Fourier series method on the basis of the deformation measurements, $\alpha$ being the orientation of the plane of bending about the central axis.

13. The calibration method as claimed in claim 12, in which at least one harmonic of a rank higher than the fundamental harmonic is determined by a Fourier series method, and in which the deformation measurements are repeated if the ratio between the higher rank harmonic and the fundamental harmonic exceeds a threshold value.

Fig.1

Fig.2

Fig.3

Fig.4

Fig.5

Fig.6

Fig.7

Fig.8

Fig.17

Fig.9
A-A

Fig.10
B-B

Fig.11

Fig.12

Fig.13

Fig.14

Fig.15

Fig.16

## RÉFÉRENCES CITÉES DANS LA DESCRIPTION

**Documents brevets cités dans la description**

- WO 2005088375 A
- FR 2871511
- WO 2006021751 A

**Littérature non-brevet citée dans la description**

- Fatigue Monitoring of Flexible Risers Using Novel Shape-Sensing Technology. *Offshore Technology Conference,* 30 Avril 2007